# EUROPÄISCHE PATENTSCHRIFT

(11) **EP 2 254 499 B1**
(45) Veröffentlichungstag und Bekanntmachung des Hinweises auf die Patenterteilung: **08.05.2019**
(21) Anmeldenummer: 09720092.7
(22) Anmeldetag: 13.03.2009
(51) Int. Cl.: A61C 1/08, A61B 1/06, A61B 1/24

(54) **LICHTQUELLE FÜR EIN ZAHNMEDIZINISCHES GERÄT**
LIGHT SOURCE FOR A DENTAL DEVICE
SOURCE DE LUMIÈRE POUR INSTRUMENT DENTAIRE

(30) Priorität: 14.03.2008 DE 102008014353; 17.07.2008 DE 102008033556
(43) Veröffentlichungstag der Anmeldung: 01.12.2010
(73) Patentinhaber: Kaltenbach & Voigt GmbH, 88400 Biberach (DE)
(72) Erfinder: STEMPFLE, Johann, 89284 Pfaffenhofen (DE); GUGEL, Bernd, 89079 Ulm (DE)
(74) Vertreter: Thun, Clemens
(86) Internationale Anmeldenummer: PCT/EP2009/001842
(87) Internationale Veröffentlichungsnummer: WO 2009/112276

(56) Entgegenhaltungen:
- EP-A- 1 112 721
- DE-A1-102007 040 596
- DE-U1-202005 020 763
- JP-A- 2000 316 874
- JP-A- 2002 343 104
- JP-A- 2004 119 045
- US-A1- 2007 253 188

## Beschreibung

Die Erfindung betrifft eine Lichtquelle zur Nutzung in einem Gerät, insbesondere in einem medizinischen oder zahnmedizinischen Gerät. Außerdem betrifft die Erfindung ein medizinisches oder zahnmedizinisches Gerät, insbesondere ein zahnmedizinisches Turbinenhandstück mit einer derartigen Lichtquelle.

Bei zahnmedizinischen Geräten ist oft eine Lichtquelle vorgesehen, um beispielsweise eine Bearbeitungsstelle, beispielsweise eine Umgebung eines Bohrers, zu beleuchten. Üblicherweise werden in zahnmedizinischen Geräten, beispielsweise zahnmedizinischen Handgeräten oder Turbinenhandstücken als Lichtquellen Halogenleuchtmittel eingesetzt, wobei das Licht dann über einen Glasstab zu einer Lichtaustrittsstelle des Geräts geführt wird. Diese Leuchtmittel eignen sich für einen Einsatz in derartigen Geräten insofern, als sie im Allgemeinen relativ helles Licht erzeugen können. Nachteilig ist allerdings ihre vergleichsweise limitierte Lebensdauer. Insbesondere werden die Halogenlampen durch Wärmeentwicklung und durch Vibrationen in der Regel stark beansprucht, was sich nachträglich auf ihre Lebensdauer auswirkt. Auch die Lichtausbeute ist vergleichsweise gering. In der Praxis hat sich gezeigt, dass derartige Halogenlampen häufig ausfallen, die Behandlung unterbrochen und eine Ersatzlampe eingesetzt werden muss.

Aus der EP 1 112 721 A1 ist ein Beleuchtungskörper für ein dentalmedizinisches Handstück bekannt. Der Beleuchtungskörper weist eine Leuchtdiode mit Leiterdrähten auf, die sich von einem Basiskörper der Leuchtdiode aus erstrecken. Die Leuchtdiode ist über eine Distanzhülse in einen stufenzylindrischen Sockel eingesetzt.

Aus der DE 20 2005 020 763 U1 ist ein gekapseltes LED-Modul bekannt, bei dem ein LED-chip auf einem Sockel angeordnet ist. Durch den Sockel hindurch erstrecken sich Kontaktelemente des LED-chips.

Eine weitere Lichtquelle für dentale Zwecke ist aus der JP 2000-316874 A bekannt und weitere LED-Lichtquellen sind ferner in den Schriften JP 2004-119045 A und US 2007/253188 A1 beschrieben.

Aus der Schrift JP 2002-343104 A ist eine Lichtquelle mit LEDs bekannt, die einen Sockel aufweist. Zur Stromversorgung der LEDs dienen Leitungen mit einem elektrischen Widerstand.

Der vorliegenden Erfindung liegt die Aufgabe zu Grunde, eine Lichtquelle zur Nutzung in einem Gerät, insbesondere in einem medizinischen oder zahnmedizinischen Gerät mit verbesserten Eigenschaften, sowie ein entsprechend verbessertes Gerät anzugeben.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine Lichtquelle zur Nutzung in einem Gerät, insbesondere in einem medizinischen oder zahnmedizinischen Gerät vorgesehen, die ein in einem Gehäuse angeordnetes Halbleiterelement aufweist, wobei das Halbleiterelement eine Lichtabgabefläche aufweist; weiterhin weist die Lichtquelle einen Sockel auf, der sich von einer der Lichtabgabefläche gegenüberliegenden Seite des Halbleiterelements aus erstreckt und der dafür vorgesehen ist, an einer in dem Gerät angeordneten Fassung eingesetzt zu werden. Der Sockel weist dabei Kontaktelemente und Leitungen zur Stromversorgung des Halbleiterelements auf. Weiterhin weist die Lichtquelle einen, mit den Leitungen elektrisch verbundenen Vorwiderstand auf, wobei der Vorwiderstand in einer Ausnehmung des Sockels angeordnet ist, und ein optisches Element zur Beeinflussung des von dem Halbleiterelement abgestrahlten Lichts, das vor der Lichtabgabefläche angeordnet ist. Die Kontaktelemente und die Leitungen sind direkt auf dem Sockel chemisch oder galvanisch abgeschieden und die Leitungen sind durch die Ausnehmung geführt und der Vorwiderstand ist dort mit den Leitungen elektrisch verbunden.

Eine derartige Lichtquelle eignet sich besonders zum Einsatz in einem entsprechenden Gerät, insbesondere in einem medizinischen oder zahnmedizinischen Gerät, weil ein Halbleiterelement im Vergleich zu einem Halogenleuchtmittel robuster und langlebiger ist.

Das Halbleiterelement kann eine Leuchtdiode (Halbleiterchip) sein. Erfindungsgemäß weist die Lichtquelle weiterhin ein optisches Element zur Beeinflussung des von dem Halbleiterelement abgestrahlten Lichts auf, wobei das optische Element vor der Lichtabgabefläche angeordnet ist. Weiterhin vorteilhaft bildet das optische Element ein Lichtaustrittsfenster. Das optische Element kann dabei an dem Gehäuse gehaltert sein und/oder einstückig mit dem Gehäuse verbunden sein. Vorzugsweise ist das optische Element luft- und/oder wasserdicht mit dem Gehäuse verbunden. Es kann also beispielsweise vorgesehen sein, dass das optische Element hermetisch, also luft- und wasserdicht mit dem Gehäuse verbunden ist. Hierdurch kann die Lichtquelle hinsichtlich ihrer Eignung zur Reinigung verbessert werden; entsprechendes gilt für das mit der Lichtquelle bestückte Gerät.

Es kann vorgesehen sein, dass das optische Element unmittelbar einen Wandbereich des Gehäuses flächig kontaktiert.

Das optische Element ist dabei kugelförmig geformt.

Das optische Element besteht vorteilhaft aus Glas, Saphir oder einem lichtleitenden Polymer.

Vorteilhaft weist die Lichtquelle weiterhin einen Träger auf, an dem das Halbleiterelement angeordnet, vorzugsweise fixiert ist, wobei die Kontaktelemente des Sockels elektrisch mit dem Träger verbunden sind. Dabei kann vorgesehen sein, dass der Träger hierzu elektrische Kontaktflächen aufweist, die elektrisch mit den Kontaktelementen verbunden sind.

Vorteilhaft ist der Träger aus einem elektrisch isolierenden Material gefertigt, vorzugsweise aus Keramik, Silizium oder Kunststoff.

Vorteilhaft ist der Träger aus einem gut wärmeleitenden Material gefertigt, vorzugsweise aus Keramik, Silizium oder Kunststoff oder einem sonstigen Material, das ähnlich gut Wärme leitet, wie eines der zuletzt genannten Materialien.

Vorteilhaft weist die Lichtquelle weiterhin einen Überzug auf, der auf dem Träger angeordnet ist und der sich über das Halbleiterelement erstreckt. Beispielsweise kann es sich bei dem Überzug um einen so genannten Globe Top handeln.

Weiterhin vorteilhaft weist das Gehäuse eine Öffnung auf, wobei das Halbleiterelement in einem Bereich der Öffnung angeordnet ist. Dabei kann die Öffnung in dem Bereich eine Form aufweisen, die auf die äußere Form des Trägers abgestimmt ist, vorzugsweise mit letzterer zumindest teilweise korrespondiert. Beispielsweise kann der Träger eine im Horizontalschnitt unrunde Form aufweisen. Hierdurch kann ein Schutz vor einer falschen Orientierung des Trägers gegenüber dem Gehäuse erzielt werden.

Bei der Öffnung kann es sich um eine Durchgangsöffnung handeln. Dabei kann der Bereich, in dem das Halbleiterelement angeordnet ist, ein mittlerer Bereich der Durchgangsöffnung sein. Alternativ kann die Öffnung eine Vertiefung sein
Gemäß einem weiteren Aspekt der Erfindung ist ein zahnmedizinisches Gerät vorgesehen, das eine erfindungsgemäße Lichtquelle aufweist. Vorteilhaft ist dabei der Sockel der Lichtquelle an die in dem Gerät angeordnete Fassung angepasst. Hierdurch lässt sich ein einfacher Austausch der Lichtquelle erzielen.

Gemäß einem noch weiteren Aspekt der Erfindung ist eine Lichtquelle zur Nutzung in einem Gerät, insbesondere in einem medizinischen oder zahnmedizinischen Turbinenhandstück bzw. Hand- und Winkelstück, vorgesehen. Die Lichtquelle weist ein vorzugsweise im Wesentlichen zylinderförmiges Gehäuse, sowie ein in dem Gehäuse angeordnetes Halbleiterelement mit einer Lichtabgabefläche auf, wobei das aus einem isolierenden Material bestehende Gehäuse eine der Lichtabgabefläche zugewandte Öffnung aufweist, welche durch ein transparentes Lichtaustrittselement abgeschlossen ist.

Es können auch mehrere entsprechende Ausnehmungen mit mehreren entsprechenden Lichtquellen vorgesehen sein.

Vorteilhaft ist dabei die Öffnung durch das Lichtaustrittselement luft- und/oder wasserdicht abgeschlossen.

Vorteilhaft ist das Halbleiterelement auf einem in dem Gehäuse angeordneten Träger, insbesondere einem Träger aus Keramik, angeordnet. Das Gehäuse kann aus Keramik bestehen.

Weiterhin wird ein Zahnmedizinisches Turbinenhandstück bzw. Hand- und Winkelstück mit einer länglichen Griffhülse, sowie einer am vorderen Ende der Griffhülse befindlichen Turbinenkopf bzw. Kopftrieb vorgeschlagen, wobei die Griffhülse in ihrer Mantelfläche eine Ausnehmung aufweist, in der eine erfindungsgemäße Lichtquelle angeordnet ist. Vorteilhaft ist dabei die Form des Gehäuses der Lichtquelle und die Form der Ausnehmung in der Mantelfläche aufeinander abgestimmt. Hierdurch lässt sich ein Verdrehschutz realisieren.

Spezifische Merkmale der Erfindung werden im Folgenden anhand von Ausführungsbeispielen und mit Bezug auf die Zeichnungen näher erläutert. Es zeigen:
- Fig. 1: eine Querschnitt-Skizze eines ersten Ausführungsbeispiels einer Lichtquelle,
- Figuren 2a und 2b: Skizzen mit Seitenansichten zu zwei unterschiedlichen Varianten des Trägers des Halbleiterelements,
- Fig. 2c: eine Aufsicht auf die in Fig. 2b gezeigte Anordnung,
- Figuren 3a bis 3c: Skizzen mit Ansichten von oben zu drei unterschiedlichen Varianten der Trägerform (bei abgenommenem optischen Element),
- Fig. 4: eine Querschnitt-Skizze eines zweiten Ausführungsbeispiels einer Lichtquelle,
- Fig. 5: eine Ansicht von unten auf die in Fig. 4 gezeigte Lichtquelle,
- Fig. 6: eine Ansicht von oben (bei abgenommenem optischen Element),
- Fig. 7: eine Ansicht von unten (bei entferntem Sockel),
- Fig. 8: eine Querschnitt-Skizze eines dritten Ausführungsbeispiels einer Lichtquelle,
- Fig. 9: eine Querschnitt-Skizze eines vierten Ausführungsbeispiels einer erfindungsgemäßen Lichtquelle,
- Fig. 10: ein Ausführungsbeispiel eines zahnärztlichen Turbinenhandstücks bzw. Hand- und Winkelstücks mit einer Lichtquelle,
- Fig. 11: ein Detail aus Fig. 10,
- Fig. 12: eine Schnittdarstellung längs des in Fig. 10 mit x - x bezeichneten Schnitts,
- Fig. 13: eine Skizze zu einer Variante eines Turbinenhandstücks mit wechselbarer Lichtquelle, bei herausgenommener Lichtquelle,
- Fig. 14: wie Fig. 13, jedoch bei eingesetzter Lichtquelle,
- Fig. 15: eine der Fig. 12 entsprechende Schnittdarstellung der Variante,
- Fig. 16: ein dentales Motorhandstück,
- Figuren 17 bis 20: Skizzen zu unterschiedlichen Ausführungsformen der Lichtquelle in einem Motorhandstücks,
- Figuren 21a bis 21 c: Ansichten entgegen der Hauptabstrahlrichtung auf unterschiedliche Varianten der Lichtquelle, und
- Figuren 22a bis 22 c: Skizzen zu einem fünften Ausführungsbeispiel einer erfindungsgemäßen Lichtquelle.

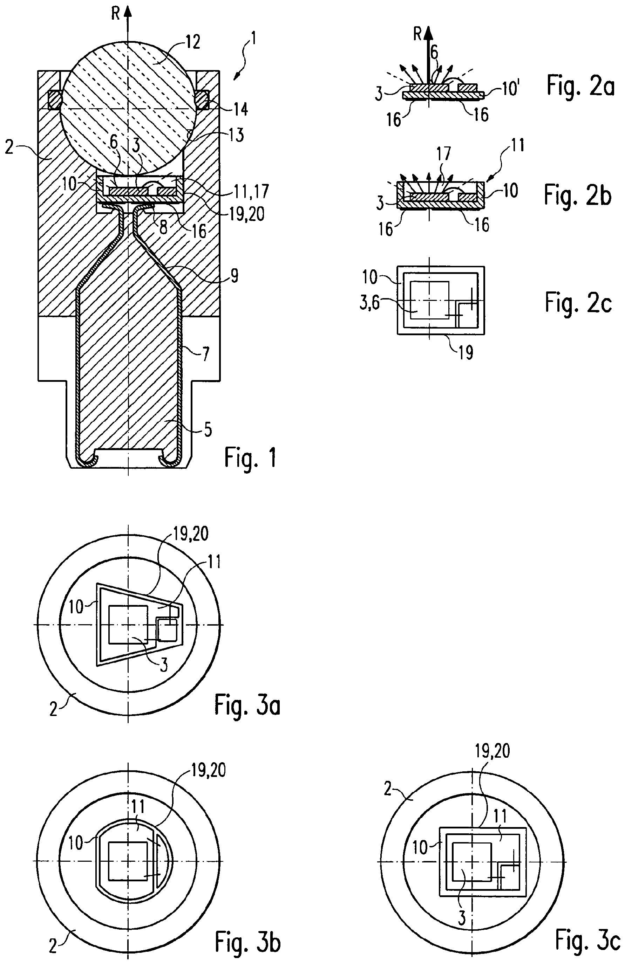

In Fig. 1 ist ein Querschnitt durch ein erstes Ausführungsbeispiel einer Lichtquelle 1 skizziert. Die Lichtquelle 1 ist zur Nutzung in einem Gerät, beispielsweise in einem medizinischen oder zahnmedizinischen Gerät vorgesehen. Allgemein ist die Erfindung aber nicht auf den Einsatz bei medizinischen Geräten beschränkt. Sie kann auch beispielsweise allgemein bei Werkzeugen, beispielsweise elektrischen Bohrwerkzeugen zum Einsatz kommen.

Die Lichtquelle 1 umfasst ein Halbleiterelement 3, das als Leuchtmittel fungiert, also ein Halbleiterelement 3, das Licht abstrahlen kann, beispielsweise eine Leuchtdiode oder einen Halbleiterchip bzw. eine Licht emittierende Diode. Das Halbleiterelement 3 weist eine aktive Fläche bzw. eine Lichtabgabefläche 6 auf, die eine ebene Fläche sein kann. Senkrecht bzw. normal zu der Lichtabgabefläche 6 erstreckt sich eine "Hauptabstrahlrichtung" der Lichtquelle, die in der Fig. 1 mit einem Pfeil R angedeutet ist. Zur leichteren Beschreibung wird im Folgenden - entsprechend der Darstellung aus Fig. 1 - mit "oben" die Richtung der Hauptabstrahlrichtung R bezeichnet.

Das Halbleiterelement 3 ist in einem Gehäuse 2 angeordnet, das vorzugsweise aus einem elektrisch isolierenden Werkstoff, beispielsweise aus Kunststoff, Glas oder Keramik gefertigt ist. Vorzugsweise besteht das Gehäuse 2 aus einem gut wärmeleitfähigen Material, um die von dem Halbleiterelement 3 erzeugte Wärme gut abtransportieren zu können. Das Gehäuse 2 kann eine zylindrische Außenform haben.

Beim ersten Ausführungsbeispiel weist das Gehäuse 2 eine Öffnung in Form einer Vertiefung auf, in der das Halbleiterelement 3 angeordnet ist. Es ist somit in einem horizontalen Schnitt bzw. in einem Schnitt senkrecht zur Hauptabstrahlrichtung allseits von dem Gehäuse 2 umgeben.

Weiterhin umfasst die Lichtquelle 1 einen Sockel 5, der sich von einer der Lichtabgabefläche 6 gegenüber liegenden Seite des Halbleiterelements 3 aus erstreckt. Mit Bezug auf die Fig. 1 erstreckt sich somit der Sockel 5 von dem Halbleiterelement 3 aus nach "unten". Der Sockel 5 ist dafür vorgesehen, an einer in dem beispielsweise zahnmedizinischen Gerät angeordneten Fassung (in Fig. 1 nicht gezeigt) eingesetzt zu werden. Vorteilhaft kann der Sockel 5 daher so geformt sein, dass er auf eine entsprechende Fassung passt, wie sie in existierenden zahnmedizinischen Geräten zur Aufnahme einer bekannten Lichtquelle, beispielsweise einer Halogenlichtquelle, vorgesehen ist. Dies ermöglicht einen besonders einfachen Austausch einer entsprechenden bekannten Lichtquelle gegen eine erfindungsgemäße Lichtquelle. Insbesondere kann die genannte Fassung eine Steckfassung sein.

Es kann vorgesehen sein, dass das zahnmedizinische Gerät einen Lichtleiter, beispielsweise in Form eines Glasstabs aufweist, der zur Leitung von Licht zu einer zur Behandlung mit dem Gerät vorgesehenen Bearbeitungsstelle vorgesehen ist und dabei die erfindungsgemäße Lichtquelle derart relativ zu dem Lichtleiter angeordnet ist, dass Licht von der Lichtquelle in den Lichtleiter eingekoppelt wird.

Der Sockel 5 weist weiterhin Kontaktelemente 8 und elektrische Leitungen 7, 9 zur Stromversorgung des Halbleiterelements 3 auf. Die Kontaktelemente 8 sind dabei durch die oberen Endbereiche der elektrischen Leitungen 9 gebildet; mit dem Bezugszeichen 7 sind dabei diejenigen Abschnitte der elektrischen Leitungen bezeichnet, die sich unterhalb des Unterrands des Gehäuses 2 erstrecken, mit 9 die Abschnitte oberhalb der Abschnitte 7.

Im gezeigten Beispiel sind die Kontaktelemente 8 mit ihren Endbereichen zwischen dem Halbleiterelement 3 und dem Grund bzw. Boden der Vertiefung des Gehäuses 2 angeordnet. Sie stehen dabei - wie in Fig. 1 angedeutet - schräg nach oben vor und sind derart ausgebildet, dass sie federnd nach unten - also in Richtung auf den Boden der Vertiefung zu - gebogen werden können.

Wie in Fig. 1 angedeutet, sind beim ersten Ausführungsbeispiel das Gehäuse 2 und der Sockel 5 einteilig ausgebildet und die elektrischen Leitungen 7, 9 dementsprechend umspritzt bzw. eingegossen.

Der Sockel 5 kann insbesondere so angeordnet sein, dass er mit einem ersten Teilbereich, der zu dem Halbleiterelement 3 hin weist, von dem Gehäuse 2 umgeben ist und mit einem zweiten Teilbereich, der dem ersten Teilbereich gegenüber liegt, aus dem Gehäuse 2 heraus vorsteht.

Die Lichtquelle eignet sich dafür, in einem entsprechenden zahnmedizinischen Gerät eingesetzt zu werden. Vorteilhaft ist hierbei unter anderem, dass die Lebensdauer eines Licht emittierenden Halbleiterelements im Allgemeinen deutlich länger ist, als die Lebensdauer eines Halogenleuchtmittels. Auch weist im Allgemeinen ein Halbleiterelement einen höheren Wirkungsgrad auf als eine Halogenlampe. Weiterhin lässt sich ein Halbleiterelement gegenüber einer Halogenlampe im Allgemeinen kleiner ausführen, so dass sich auch hinsichtlich der Baugröße Vorteile ergeben.

Weiterhin weist die Lichtquelle gemäß dem hier gezeigten Ausführungsbeispiel ein optisches Element 12 zur Beeinflussung des von dem Halbleiterelement 3 abgestrahlten Lichts auf. Das optische Element 12 ist dabei vor bzw. oberhalb der Lichtabgabefläche 6 des Halbleiterelements 3 angeordnet und kann dabei ein Lichtaustrittsfenster, also ein Lichtaustrittselement bilden, so dass das Halbleiterelement 3 hierdurch geschützt ist. Im gezeigten Beispiel wird die Vertiefung des Gehäuses 2 nach oben hin durch das optische Element 12 verschlossen. Hierdurch ist eine Schutzfunktion für Bauteile gebildet, die sich unterhalb des optischen Elements 3 in der Vertiefung befinden, also beispielsweise für das Halbleiterelement 3 und die Kontaktelemente 8.

Das optische Element 12 ist beim hier gezeigten ersten Ausführungsbeispiel an dem Gehäuse 2 gehaltert. Hierzu kann beispielsweise, wie in Fig. 1 angedeutet, ein Ringelement 14, beispielsweise in Form eines Dichtelements aus einem elastischen Material, also beispielsweise ein O-Ring, dienen.

Außerdem kann vorgesehen sein, dass - wie ebenfalls in Fig. 1 angedeutet - die Form des optischen Elements 12 und die Form des Gehäuses 2 so aufeinander abgestimmt sind, dass ein flächiger Kontakt zwischen den beiden Bauteilen 12, 2 hergestellt ist, wenn diese sich in der vorgesehenen gegenseitigen Einbaulage befinden. Dabei kann eine Kontaktfläche 13 vorgesehen sein, die beispielsweise einen Teilbereich einer Kugelfläche definiert. Das optische Element 12 kontaktiert also in diesem Fall mit einem Teilbereich seiner Oberfläche unmittelbar die hierfür vorgesehene Kontaktfläche 13 des Gehäuses 2. Hierdurch kann eine besonders gute Schutzfunktion für das Halbleiterelement 3 gebildet sein, wie sie beispielsweise im Fall einer Sterilisation des Geräts vorteilhaft sein kann.

Vorzugsweise sind das optische Element 12 und das Gehäuse 2 luft- und/oder wasserdicht miteinander verbunden, also beispielsweise hermetisch dicht verbunden.

Vorteilhaft kann dabei das optische Element 12 rotationssymmetrisch geformt sein und dabei so angeordnet sein, dass die Symmetrieachse zu der Flächennormale der Lichtabgabefläche 6 des Halbleiterelements 3 parallel ist und dabei vorzugsweise durch einen Mittelpunkt der Lichtabgabefläche 6 verläuft.

Das optische Element 12 kann eine Linse sein. Das optische Element 12 kann beispielsweise planparallel, konvex, bikonvex oder - wie in Fig. 1 angedeutet - kugelförmig sein. Das optische Element 12 kann aus Glas, Saphir oder einem lichtleitenden Polymer bestehen.

Beim gezeigten Ausführungsbeispiel ist weiterhin ein Träger 10 vorgesehen, an dem das Halbleiterelement 3 angeordnet und vorzugsweise fixiert ist und mit dem es elektrisch verbunden ist. Der Träger 10 ist dabei elektrisch mit den Kontaktelementen 8 des Sockels 5 verbunden. Hierzu kann der Träger 10, wie in der Teildarstellung aus Fig. 2b ersichtlich, beispielsweise an seiner Unterseite entsprechende Kontaktflächen 16 aufweisen, die zum elektrischen Kontakt mit den Kontaktelementen 8 des Sockels 5 vorgesehen sind. Vorzugsweise sind die Kontaktflächen 16 außen auf dem Träger 10, und zwar auf der dem Halbleiterelement 3 gegenüberliegenden Außenfläche angeordnet. Die Kontaktflächen 16 können beispielsweise mittels PVD-Beschichtung (PVD: physical vapour deposition) oder Siebdruck etc. aufgebracht sein.

Der Träger 10 ist dabei vorzugsweise aus einem elektrisch isolierenden Material gefertigt, beispielsweise aus Keramik, Silizium oder Kunststoff. Ein derartiges Material ist auch insoweit vorteilhaft, als es Wärme vergleichsweise gut leitet und somit dazu beitragen kann, dass Wärme, die im Betrieb von dem Halbleiterelement 3 erzeugt wird, besonders effektiv abtransportiert wird.

Der Träger kann - wie in Fig. 2a angedeutet - die Form einer Platte haben, also ein reines Flachmaterial sein oder - wie in Fig. 2b angedeutet - die Form eines Topfes oder "Napfes" haben. Zur Unterscheidung ist die in Fig. 2a gezeigte Variante des Trägers mit dem Bezugszeichen 10' versehen.

Insbesondere im Fall eines topfförmigen Trägers 10 kann zum Schutz des Halbleiterelements 3 vorgesehen sein, dass dieses mit einem Überzug 17 ("Globe Top") versehen ist, der auf dem Träger 10 bzw. in dem von dem Topf gebildeten Innenraum angeordnet ist und der sich über das Halbleiterelement 3 erstreckt. Vorzugsweise wird von dem Überzug 17 das Halbleiterelement 3 vollständig abgedeckt. Der Überzug 17 kann durch eine Vergussmasse gebildet sein. Durch den Überzug 17 kann das Halbleiterelement 3 insbesondere vor Berührung und Umwelteinflüssen, wie Feuchte und ähnlichem geschützt werden. Auch eine etwaig vorhandene innerhalb des "Topfes" verlaufende interne Verdrahtung des Halbleiterelements 3 kann von dem Überzug 17 abgedeckt und geschützt sein. Mit Bezug auf seine (gemäß Fig. 2a) "obere" Begrenzung kann der Überzug 17 derart gestaltet sein, dass er mit dem seitlichen Rand des "Topfes" abschließt, so dass der Oberrand des Topfes und der Oberrand des Überzugs 17 in einer Ebene liegen.

Im Folgenden wird die Einheit, bestehend aus dem Halbleiterelement 3, dem Träger 10 und gegebenenfalls dem Überzug 17 auch als "Beleuchtungselement" 11 bezeichnet.

Fig. 2c zeigt eine Aufsicht auf den in Fig. 2b in Seitenansicht gezeigten Träger 10. Man erkennt, dass bei dieser Form der Träger 10 im Horizontalschnitt eine rechteckige Form bzw. Kontur aufweist. Der Träger 10 ist also in diesem Fall zusammen mit dem Überzug 17 quaderförmig.

Wie in Fig. 1 angedeutet, kann vorgesehen sein, dass das Gehäuse 2, beispielsweise im Bereich der Vertiefung eine Trägerfassung für den Träger 10 bildet. Dabei kann vorteilhaft die Form der Trägerfassung an die Außenform des Trägers 10 angepasst sein. Es kann also vorteilhaft vorgesehen sein, dass die Form des Trägers 10 einerseits und die Form der Vertiefung des Gehäuses 2 bzw. der von dem Gehäuse 2 gebildeten Trägerfassung andererseits so aufeinander abgestimmt sind, dass der Träger 10 mit dem daran angeordneten Halbleiterelement 3 formschlüssig in die Trägerfassung eingesetzt werden kann. In dem in Fig. 1 gezeigten Fall weist in diesem Sinne die Vertiefung in ihrem unteren Bereich eine Wandung mit rechteckigem Querschnitt auf, die in Form und Größe mit der äußeren Form des Trägers 10 korrespondiert. Auf diese Weise lässt sich der Träger 10 besonders einfach in einer definierten Orientierung und Lage in der Vertiefung des Gehäuses 2 anordnen. Mit dem Bezugszeichen 19 ist die Kontur des Trägers 10 bzw. des Beleuchtungselements 11 bezeichnet, mit dem Bezugszeichen 20 ist die Kontur der Trägerfassung bzw. der Vertiefung.

Besonders vorteilhaft kann vorgesehen sein, dass die Außenform bzw. der horizontale Querschnitt des Trägers 10 ein Rechteck, ein Polygon, ein Kreissegment, ein Kreis mit Nut oder Nocken oder dergleichen bildet, wie exemplarisch in den Figuren 3a, 3b und 3c skizziert, die jeweils eine Ansicht von oben bei abgenommenem optischen Element 12 zeigen. Wie beispielhaft die Figuren 3a und 3b zeigen, lässt sich durch geeignete Wahl dieser Form insbesondere erzielen, dass der Träger 10 nur in eindeutiger Ausrichtung in die Vertiefung eingebracht werden kann. Auf diese Weise kann eine falsche elektrische Kontaktierung zwischen dem Träger 10 und den Kontaktelementen 8 des Sockels 5 zuverlässig verhindert werden.

Wie weiterhin aus den Figuren 3a, 3b und 3c in Verbindung mit Fig. 1 deutlich wird, ist beim gezeigten Beispiel das Halbleiterelement 3 im Horizontalschnitt quadratisch, und dementsprechend die Lichtabgabefläche 6 quadratisch, wobei der Träger 10 relativ zu dem Gehäuse 2 so angeordnet ist, dass der Mittelpunkt der Lichtabgabefläche 6 mit der Abstrahlrichtung R zusammenfällt.

Es kann weiterhin vorgesehen sein, dass die durch das Gehäuse gebildete Trägerfassung derart ausgebildet ist, dass der Träger 10 darin geführt von oben gegen die federnden Kontaktelemente 8 des Sockels 5 gedrückt werden kann. In diesem Fall kann vorgesehen sein, dass der Träger 10 bei einem Einsetzen des optischen Elements 12 durch letzteres mit seinen Kontaktflächen 16 gegen die elektrischen Kontaktelemente 8 des Sockels 5 gedrückt wird. Weiterhin kann dabei die Vertiefung so geformt sein, dass eine Einpresstiefe des optischen Elements 12 durch die Vertiefung bzw. durch die Trägerfassung begrenzt ist.

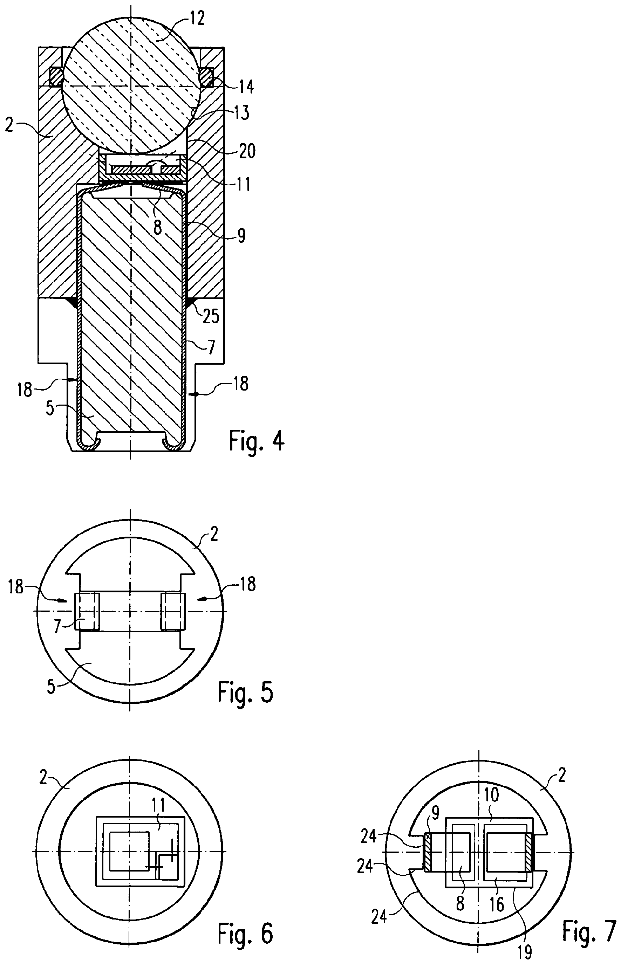

In Fig. 4 ist ein Querschnitt durch ein zweites Ausführungsbeispiel einer Lichtquelle gezeigt. Im Folgenden wird nur auf Unterschiede zum ersten Ausführungsbeispiel eingegangen. Soweit nicht anders dargestellt, gelten die Ausführungen zum ersten Ausführungsbeispiel analog. Für gleiche oder entsprechende Bauteile sind dieselben Bezugszeichen gewählt. Entsprechendes gilt auch für die weiteren Ausführungsbeispiele bzw. -formen.

Im Gegensatz zum ersten Ausführungsbeispiel ist die Öffnung des Gehäuses 2 keine Vertiefung, sondern eine Durchgangsöffnung. Die Durchgangsöffnung erstreckt sich im gezeigten Beispiel von oben nach unten längs der Hauptabstrahlrichtung R. Der Sockel 5 und das Gehäuse 2 sind zweiteilig ausgebildet. Zur Halterung des Sockels 5 gegenüber dem Gehäuse 2 kann eine Klebung vorgesehen sein. In Fig. 2 ist eine entsprechende Klebestelle 25 angedeutet.

Im gezeigten Beispiel ist der Sockel 5 mit einem ersten Teilbereich innerhalb der Durchgangsöffnung des Gehäuses 2 angeordnet und ragt mit einem zweiten Teilbereich nach unten aus dem Gehäuse 2 hervor. Mit dem Bezugszeichen 18 ist ein Kontaktbereich des Sockels 5 zur Verbindung mit der Geräte-seitigen Ansteuerung bezeichnet.

Vorzugsweise ist die Verbindung zwischen Sockel 5 und Gehäuse 2 derart, dass der Sockel 5 nur in der richtigen Drehposition in das Gehäuse eingesetzt werden kann. Hierzu kann beispielsweise eine entsprechende, im horizontalen Querschnitt unrunde Formgebung des Sockels 5 bzw. des Gehäuses 2 vorgesehen sein. Ein Beispiel hierzu ist in Fig. 5 angedeutet, in der eine Ansicht von unten auf den Sockel 5 und das Gehäuse 2 gezeigt ist.

Beim zweiten Ausführungsbeispiel ist das optische Element 12 so angeordnet, dass es auf derjenigen Seite der Durchgangsöffnung, die zur Lichtabstrahlrichtung R weist, die Durchgangsöffnung verschließt. Zur Abdichtung und Halterung des optischen Elements 12 an dem Gehäuse 2 kann wiederum ein Ringelement 14 aus elastischem Material, beispielsweise ein O-Ring vorgesehen sein.

Fig. 6 zeigt eine Ansicht von oben - bei entferntem optischen Element 12 und Fig. 7 eine Ansicht von unten - bei entferntem Sockel 5. Mit dem Bezugszeichen 24 ist die entsprechende innere Kontur des Gehäuses 2 bzw. der Durchgangsöffnung zur Aufnahme des Sockels 5 und zur Ausrichtung mit Bezug auf das Beleuchtungselement 11 bezeichnet.

Der Träger 10 kann analog zu dem ersten Ausführungsbeispiel gehaltert sein. Es kann aber auch ein Vorsprung in der Durchgangsöffnung vorgesehen sein, der als Auf- oder Anlage zur Halterung des Trägers 10 dient.

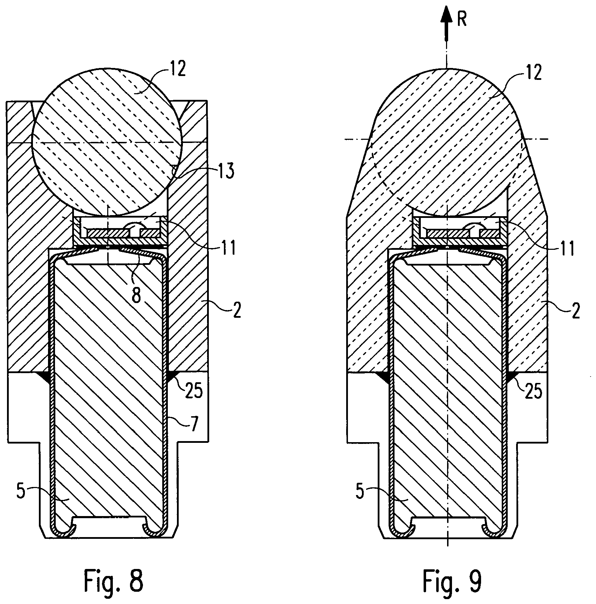

In Fig. 8 ist ein drittes Ausführungsbeispiel skizziert. Es unterscheidet sich vom zweiten Ausführungsbeispiel darin, dass das optische Element 12 mit dem Gehäuse 2 durch eine Klemmverbindung, beispielsweise eine Schnapp-Verbindung gehalten ist. In Fig. 9 ist ein viertes Ausführungsbeispiel skizziert. Die Besonderheit bei diesem Ausführungsbeispiel liegt darin, dass das optische Element 12 und das Gehäuse 2 einteilig ausgeführt sind. Das Gehäuse 2 und das optische Element 12 können dabei beispielsweise aus Glas oder transparentem Polymer gefertigt sein. Das Gehäuse 2 weist dabei in einem Bereich, der zur Hauptabstrahlrichtung R weist, einen konischen Bereich auf, der formschlüssig in die hier gewählte Kugelform des optischen Elements 12 übergeht. Dabei kann vorgesehen sein, dass das optische Element 12 mit dem Gehäuse 2 verschmolzen ist und auf diese Weise eine Einheit bildet. Es kann also eine einstückige Verbindung zwischen dem Gehäuse 2 und dem optischen Element 12 vorgesehen sein. Diese Ausführung ermöglicht einen besonders zuverlässigen Schutz des Halbleiterelements 3 von oben her bzw. von der Seite des optischen Elements 12 her.

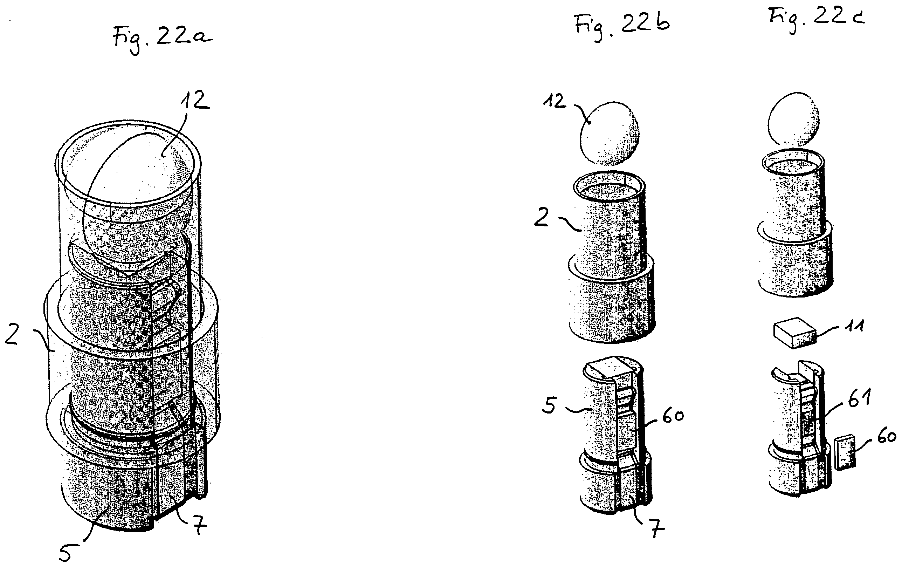

In den Figuren 22a bis 22c ist ein fünftes Ausführungsbeispiel, welches eine erfindungsgemäße Lichtquelle skizziert, dargestellt. Dabei zeigt Fig. 22a eine teilweise transparente Darstellung der zusammengebauten Lichtquelle und Fig. 22b die Teile Sockel 5, Gehäuse 2 und optisches Element 12 der Lichtquelle in getrenntem Zustand. Fig. 22c zeigt eine weitere Darstellung, in der - im Vergleich zu Fig. 22b - noch zwei weitere Bauteile, nämlich das Beleuchtungselement 11 und ein Vorwiderstand 60 vom Sockel 5 getrennt dargestellt sind.

Die Kontaktelemente /Leitungen 7, ebenso wie die (in den Figuren 22a bis 22c nicht gesondert bezeichneten) Kontaktelemente 8, 9 können als Leiterbahnstruktur oder kurz Leiterstruktur auf der Mantelfläche des Sockels 5 ausgebildet sein. Im unteren Bereich des Sockels 5 können sie die Kontaktierung zur geräteseitigen Fassung darstellen. Das optische Element 12 - beispielsweise in Form einer Glaskugel - und der Sockel 5 können über Schnappverbindungen mit dem Gehäuse 2 verbunden sein. Zusätzlich kann jeweils eine Abdichtung mit einem Klebstoff vorgesehen sein.

Bei besonders hoher Lichtintensität und/oder bei besonders hohen Betriebstemperaturen - also bei "kritischen Anwendungen" - ist es vorteilhaft, für den Betrieb des Halbleiterelements 3 einen Vorwiderstand 60 vorzusehen, um den Strom für das Halbleiterelement 3, also den "LED-Strom", begrenzen zu können und somit die Gefahr einer Zerstörung des Halbleiterelements bzw. des Beleuchtungselements 11 zu verringern. (Alternativ kann hierzu eine Ansteuerung mit einer einstellbaren Spannungsquelle vorgesehen sein.) Dieser Vorwiderstand 60 ist innerhalb der Lichtquelle 1 angeordnet auf diese Weise kann die Lichtquelle 1 besonders leicht in existierenden Geräten bzw. Lampen verwendet werden. Dadurch ist also die Kompatibilität der Lichtquelle besonders gut. Erfindungsgemäß weist hierzu - wie in Fig. 22c skizziert - der Sockel 5 eine Ausnehmung 61 auf, in der der Vorwiderstand 60 angeordnet werden kann. Erfindungsgemäß ist das Kontaktelement 7 durch diese Ausnehmung 61 gefuhrt sein und der Vorwiderstand 60 dort mit dem Kontaktelement 7 elektrisch verbunden sein. Sowohl das Beleuchtungselement 11, als auch der Vorwiderstand 60 können über Lötverbindungen mit der Leiterstruktur bzw. mit den Kontaktelementen 7, 8, 9 elektrisch leitend verbunden sein.

Zur Kontaktierung der beiden Bauteile Beleuchtungselement 11 und Vorwiderstand 60 können auch federnde Kontakte vorgesehen sein. Aufgrund der filigranen Teile ist es jedoch vorteilhaft, die Kontakte und Leitungen direkt auf dem Sockel 5 chemisch/galvanisch abzuscheiden. Hierzu kann für den Sockel 5 ein mittels Laserstrahl aktivierbarer Kunststoff verwendet werden und die Leiterstruktur mittels Laserstrahl erzeugt (belichtet) werden. Auf den aktivierten Flächen kann dann die Leiterstruktur chemisch abgeschieden und galvanisch bis zu der geforderten Dicke aufgedickt werden (zum Beispiel 30 µm Cu / 5 µm Ni / 1 µm Au).

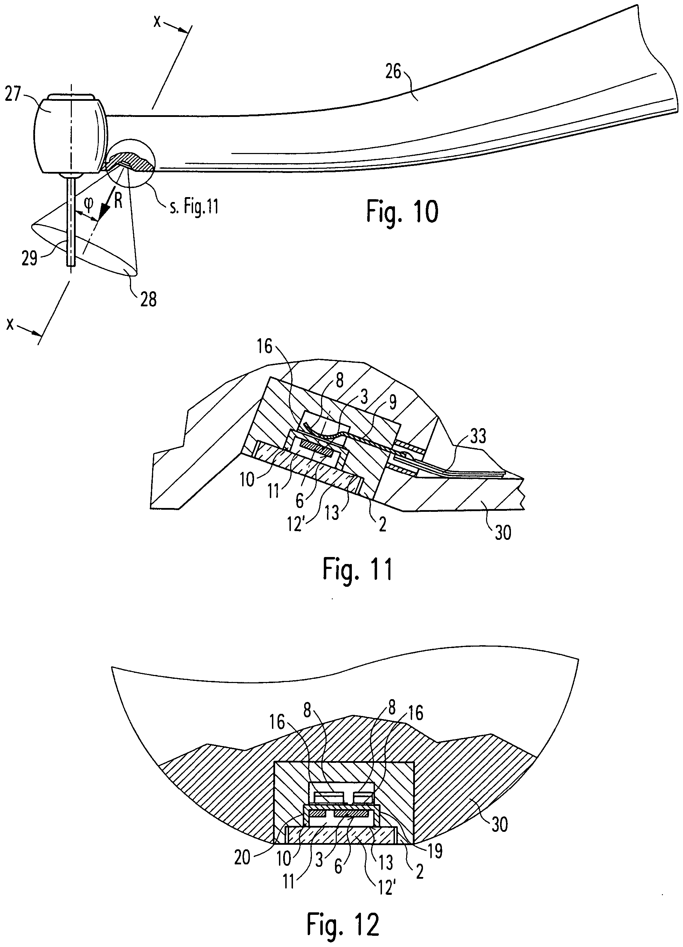

In den Figuren 10 bis 12 ist ein weiteres Ausführungsbeispiel für eine Lichtquelle gezeigt, das sich insbesondere zur Verwendung in einem zahnmedizinischen Turbinenhandstück 26 bzw. Hand- und Winkelstück eignet. Fig. 10 zeigt eine schematische Ansicht eines solchen Turbinenhandstücks 26 bzw. Hand- und Winkelstücks; am vorderen Ende des Geräts erkennt man einen Turbinenkopf 27 bzw. Kopftrieb und ein in dem Turbinenkopf 27 bzw. Kopftrieb eingesetztes Bearbeitungswerkzeug 29, bei dem es sich beispielsweise um einen Bohrer handeln kann. Fig. 11 zeigt eine Detailansicht aus der Fig. 10, und zwar aus dem in Fig. 10 entsprechend markierten Bereich; Fig. 12 zeigt eine Schnittdarstellung, und zwar längs des in Fig. 11 mit x - x bezeichneten Schnitts. Wiederum sind im Folgenden die weiter oben verwendeten Bezugszeichen in analoger Bedeutung übernommen. Soweit nicht anders dargestellt, gelten die obigen Ausführungen entsprechend.

Die Lichtquelle weist ein vorzugsweise im Wesentlichen zylinderförmiges Gehäuse 2 auf, sowie ein in dem Gehäuse 2 angeordnetes Halbleiterelement 3 mit einer Lichtabgabefläche 6. Das Halbleiterelement 3 kann wiederum durch einen vorzugsweise keramischen Träger 10 gehaltert sein. Das Gehäuse 2 besteht aus einem isolierenden Material, beispielsweise Keramik, und weist eine der Lichtabgabefläche 6 des Halbleiterelements 3 zugewandte Öffnung auf, welche durch das optische Element 12, das hierbei ein transparentes Lichtaustrittselement darstellen kann, abgeschlossen ist.

Das Gehäuse 2 ist vorzugsweise flächig. Beispielsweise kann das Gehäuse zylinderförmig sein, wobei die Höhe des entsprechenden Zylinders kleiner ist als sein Durchmesser.

Bei diesem Beispiel ist die Lichtquelle so am Gerät, also hier an dem zahnmedizinischen Turbinenhandstück 26 bzw. Hand- und Winkelstück angeordnet, dass das optische Element 12 direkt einen Außenwandbereich des Geräts bildet. Hierfür ist in dem Gerät, und zwar in einer Wandung 30 der Hülse des Geräts, in der Nähe des Turbinenkopfes 27 bzw. Kopftriebs eine - in den Figuren 11 und 12 skizziert angedeutete - Ausbuchtung vorgesehen, in der die Lichtquelle angeordnet ist.

Die Lichtquelle ist relativ zu dem restlichen Turbinenhandstück 26 bzw. Hand- und Winkelstück derart angeordnet, dass sie zur Ausleuchtung einer mit dem Turbinenhandstück 26 bzw. Hand- und Winkelstück zu bearbeitenden Bearbeitungsstelle dienen kann. In Fig. 10 ist der Ausleuchtbereich mit dem Bezugszeichen 28 bezeichnet. Der Ausleuchtbereich 28 erstreckt sich dabei um die Hauptabstrahlrichtung R herum und umfasst einen Bereich um das Ende des Bearbeitungswerkzeugs 29. Die Lichtquelle kann beispielsweise so nahe am Turbinenkopf 27 angeordnet sein, dass die Hauptabstrahlrichtung R mit der Längsachse bzw. Rotationsachse des Bearbeitungswerkzeugs 29 einen Winkel ϕ von maximal 60°, vorzugsweise maximal 45° bildet.

Die elektrische Kontaktierung der Lichtquelle kann am Grund der Ausbuchtung, beispielsweise mittels Lötverbindung, vorgesehen sein. In Fig. 11 ist mit dem Bezugszeichen 33 eine Kontaktierung mit der Geräte-seitigen Ansteuerung bezeichnet. Diese Kontaktierung 33 kann dabei mittels Flexleiter auf Kaptonbasis (Träger-Deckfolie aus Kapton) vorgesehen sein oder mittels MID (MID: molded interconnect devices) beispielsweise auf der äußeren Hülse des Geräts vorgesehen sein. Die Kontaktierung 33 kann aber auch im Inneren des Turbinenhandstücks, beispielsweise innerhalb oder in der Wandung 30 vorgesehen sein.

Vorteilhaft ist in diesem Fall das optische Element 12 mit einem sterilisationsfähigen Klebstoff am Gehäuse 2 abgedichtet. Das optische Element 12 kann dabei durch eine planparallele Scheibe gebildet sein. Das optische Element 12 kann dabei einen Prismenschliff aufweisen. Das optische Element 12 kann beispielsweise aus Glas, Saphir, Pressglas oder transparentem Polymer bestehen. Die optische Achse des optischen Elements 12 kann vorteilhaft auf die vorgesehene Bearbeitungsstelle des Turbinenhandstücks 26 bzw. Hand- und Winkelstücks ausgerichtet sein, wie in Fig. 10 angedeutet; sie kann mit der Hauptabstrahlrichtung R zusammenfallen.

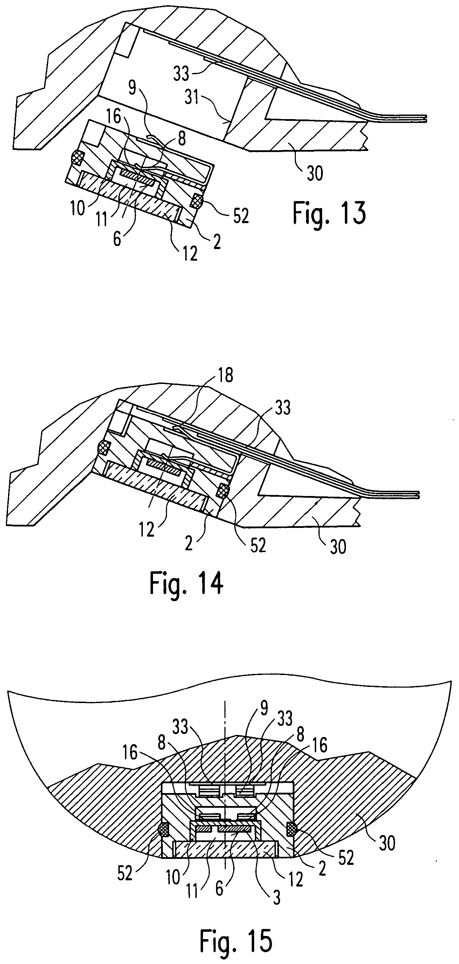

In den Figuren 13 bis 15 ist eine Variante zu der zuletzt genannten Lichtquelle gezeigt. Der Unterschied besteht insbesondere darin, dass die Lichtquelle gemäß dieser Variante wechselbar in dem Turbinenhandstück 26 bzw. Hand- und Winkelstück vorgesehen ist. Hierdurch ist ein besonders leichter Ersatz im Falle eines Defekts möglich. In Fig. 13 ist die Situation bei herausgenommener Lichtquelle gezeigt, in Fig. 14 die Einbausituation. Fig. 15 zeigt einen Schnitt quer zur Längsachse des Turbinenhandstücks 26 bzw. Hand- und Winkelstücks.

In der Wandung 30 des Turbinenhandstücks 26 bzw. Hand- und Winkelstücks, die die Mantelfläche des Geräts bildet, ist hierfür eine Ausbuchtung oder Ausnehmung 31 vorgesehen, die zur Aufnahme der Lichtquelle geeignet ist. Vorzugsweise sind die Form des Gehäuses 2 der Lichtquelle und die Form der Ausnehmung 31 in der Mantelfläche des Geräts aufeinander abgestimmt. Beispielsweise kann die Ausnehmung 31 eine derart zu der äußeren Form des Gehäuses 2 korrespondierende Form aufweisen, dass die Lichtquelle nur in der vorgesehenen Orientierung in die Ausnehmung 31 eingesetzt werden kann.

Vorteilhaft ist zwischen der Lichtquelle und der Wandung 30 eine dichte, beispielsweise luft- und/oder wasserdichte Verbindung vorgesehen. Hierzu kann ein Dichtungselement 52, beispielsweise in Form eines O-Rings dienen. Dies ist beispielsweise mit Bezug auf eine Sterilisierbarkeit des Turbinenhandstücks 26 bzw. Hand- und Winkelstücks vorteilhaft.

Zur elektrischen Verbindung zwischen der Lichtquelle und dem restlichen Turbinenhandstück 26 können in diesem Fall die federnden Kontaktelemente 8 am Gehäuse 2 vorgesehen sein. Beispielsweise kann der Kontaktbereich 18 der Kontaktelemente 8 der Lichtquelle am Grund der Ausnehmung 31 vorgesehen sein.

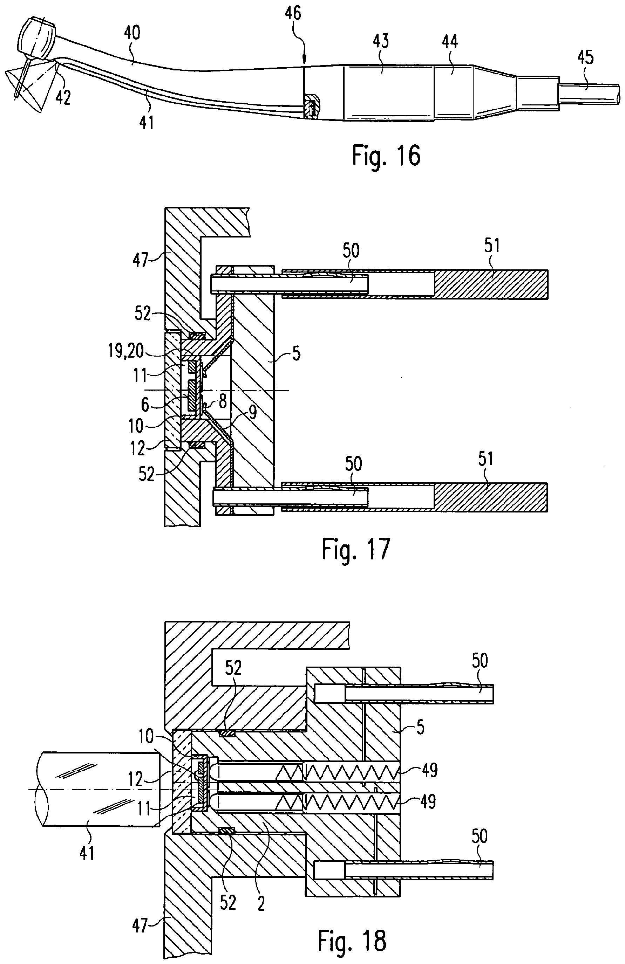

In Fig. 16 ist ein Motorhandstück mit einer erfindungsgemäßen Lichtquelle skizziert. Das Motorhandstück umfasst ein Hand- und Winkelstück 40, einen Glasstab 41, der als Lichtleiter dient, einen Lichtaustrittsbereich 42 am vorderen Ende des Glasstabs 41, einen Motorteil 43, einen Kupplungsteil 44, einen Schlauchteil 45. Mit dem Bezugszeichen 46 ist die Schnittstelle zwischen dem Hand- und Winkelstück 40 und dem Motorteil 43 bezeichnet. Vorzugsweise ist die Lichtquelle an der Grenze zwischen dem Hand- und Winkelstück 40 und dem Motorteil 43 vorgesehen. Vorzugsweise ist die Lichtquelle wechselbar im Motorhandstück vorgesehen.

In den Figuren 17 bis 20 sind Skizzen zu unterschiedlichen Ausführungen der Lichtquelle und der Halterung und elektrischen Verbindung der Lichtquelle im Motorteil 43 gezeigt.

Bei der in Fig. 17 gezeigten Variante sind Steckerhülsen 50 zur elektrischen Verbindung der Lichtquelle mit der Motor-internen elektrischen Leitung 51 vorgesehen; die Motor-interne elektrische Leitung 51 führt andererseits zum Kupplungsteil 44 bzw. zum Schlauchteil 45. Die Steckerhülsen 50 sind bei diesem Beispiel sowohl mit dem Gehäuse 2, als auch mit dem Sockel 5 verbunden. Für die elektrischen Verbindungen mit den Motor-seitigen Leitungen können beispielsweise Niet-, Press- oder Quetschverbindungen vorgesehen sein.

Zur Abdichtung und Fixierung des Gehäuses 2 im Motorteil 43 kann ein Dichtungselement, beispielsweise in Form eines O-Rings 52 dienen.

Bei der in Fig. 18 gezeigten Variante sind federnde, vorzugsweise zylindrische Kontaktstifte 49 zur elektrischen Verbindung zwischen dem Beleuchtungselement 11 und den Steckerhülsen 50 vorgesehen.

Weiterhin ist in Fig. 18 das dem Motorteil zugewandte Ende des Lichtleiters bzw. Glasstabs 41 zu erkennen. Die relative Anordnung zwischen der Lichtabgabefläche 6 und dem Lichtleiter 41 ist derart, dass das Zentrum der Lichtabgabefläche 6 auf der Längsachse des Endbereichs des Lichtleiters 41 liegt; auf diese Weise wird Licht von der Lichtabgabefläche 6 besonders effektiv in den Lichtleiter 41 eingekoppelt.

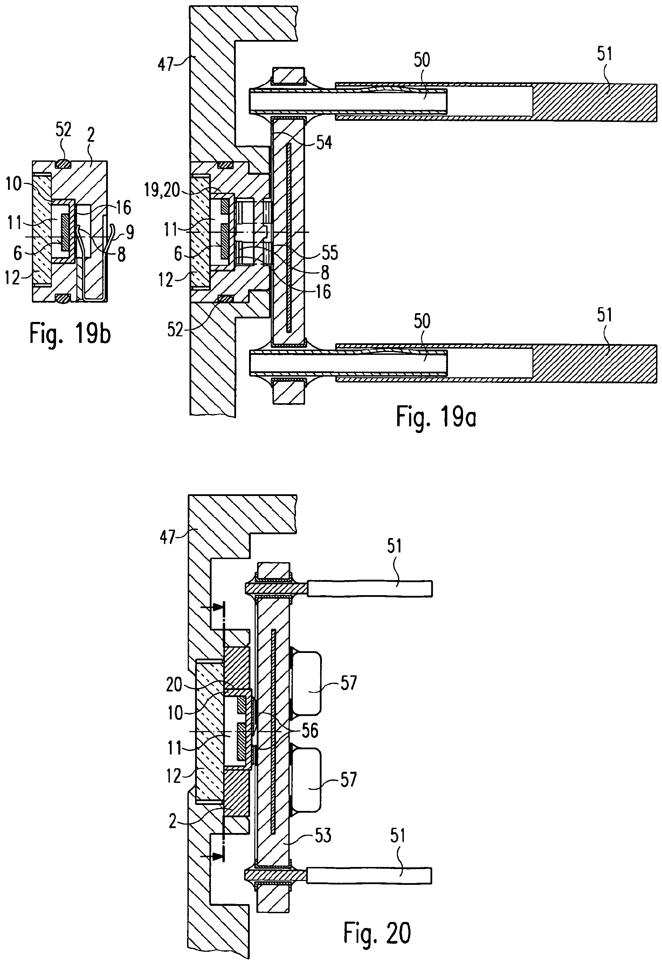

In Fig. 19a ist eine Variante mit einer Leiterplatte 53 gezeigt. Die Leiterplatte 53 kann zur Anpassung der Versorgungsspannung an die Anforderungen des Halbleiterelements 3 dienen. Die Leiterplatte 53 besteht vorzugsweise aus Keramik und weist elektrische Leiter, Kontakt- und Lötbereiche auf. Zur elektrischen Verbindung zwischen der Leiterplatte 53 und dem Beleuchtungselement 11 dient dabei ein Federkontaktbereich 55. In Fig. 19b ist ein Schnitt die Lichtquelle dargestellt, der gegenüber der Darstellung aus Fig. 19a um 90° gedreht ist.

Bei der in Fig. 20 skizzierten Variante sind Lötstellen 20 zwischen der Lichtquelle und der Leiterplatte 53 vorgesehen. Der Träger 10 ist hier also direkt auf die Leiterplatte (Keramiksubstrat) aufgelötet. Auf der den Lötstellen 20 gegenüberliegenden Seite der Leiterplatte 53 sind elektrische Bauelemente 57 vorgesehen, die eine elektrische Beschaltung auf der Leiterplatte 53 zur Pegelanpassung des Halbleiterelements 3 bilden.

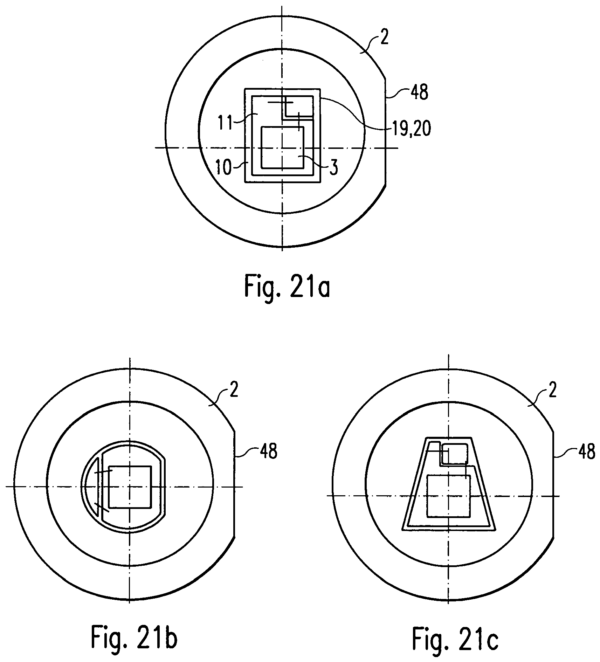

In Fig. 21a ist eine Ansicht auf die Lichtquelle entgegen der Hauptabstrahlrichtung gezeigt. Man erkennt, dass das Gehäuse 2 in diesem Schnitt eine unrunde Kontur aufweisen kann, beispielsweise kann die Kontur durch eine Kreislinie mit einer Abflachung 48 gegeben sein. Das Motorteil-Gehäuse 47 kann eine korrespondierende Form aufweisen, so dass eine eindeutige Lageorientierung zwischen diesen beiden Bauteilen 2, 47 gewährleistet ist. Hierdurch lässt sich ein Verdrehschutz realisieren, der insbesondere zur Sicherstellung der vorgesehenen elektrischen Kontaktierung beitragen kann. Die Figuren 21b und 21c zeigen zwei weitere Varianten. Abgesehen von der Abflachung 48 entsprechend die Figuren 21a bis 21c den Figuren 3a bis 3c.

## Patentansprüche

1. Lichtquelle zur Nutzung in einem Gerät, insbesondere in einem medizinischen oder zahnmedizinischen Gerät, aufweisend
- wenigstens ein in einem Gehäuse (2) angeordnetes Halbleiterelement (3), wobei das Halbleiterelement (3) eine Lichtabgabefläche (6) aufweist, und
- einen Sockel (5), der sich von einer der Lichtabgabefläche (6) gegenüberliegenden Seite des Halbleiterelements (3) aus erstreckt und der dafür vorgesehen ist, an einer in dem Gerät angeordneten Fassung eingesetzt zu werden,
wobei der Sockel (5) Kontaktelemente (8) und Leitungen (7) zur Stromversorgung des Halbleiterelements (3) aufweist,
- einen, mit den Leitungen (7) elektrisch verbundenen Vorwiderstand (60), wobei der Vorwiderstand (60) in einer Ausnehmung (61) des Sockels (5) angeordnet ist,
- ein optisches Element (12) zur Beeinflussung des von dem Halbleiterelement (3) abgestrahlten Lichts, das vor der Lichtabgabefläche (6) angeordnet ist,
**dadurch gekennzeichnet,**
**dass** die Kontaktelemente (8) und die Leitungen (7) direkt auf dem Sockel (5) chemisch oder galvanisch abgeschieden sind,
wobei die Leitungen (7) durch die Ausnehmung (61) geführt und der Vorwiderstand (60) dort mit den Leitungen (7) elektrisch verbunden ist.

2. Lichtquelle nach einem der vorhergehenden Ansprüche,
bei der der Sockel (5) über eine Schnappverbindung mit dem Gehäuse (2) verbunden ist.

3. Lichtquelle nach einem der vorhergehenden Ansprüche,
bei der das optische Element (12) ein Lichtaustrittsfenster bildet,
wobei das optische Element (12) vorzugsweise an dem Gehäuse (2) gehaltert ist und/oder einstückig mit dem Gehäuse (2) verbunden ist.

4. Lichtquelle nach einem der vorhergehenden Ansprüche,
bei der das optische Element (12) luft- und/oder wasserdicht mit dem Gehäuse (2) verbunden ist.

5. Lichtquelle nach einem der vorhergehenden Ansprüche,
wobei das optische Element (12) planparallel, konvex, bikonvex oder kugelförmig geformt ist, und/oder
wobei das optische Element (12) aus Glas, Saphir oder einem lichtleitenden Polymer besteht.

6. Lichtquelle nach einem der vorhergehenden Ansprüche,
weiterhin aufweisend
- einen Träger (10), an dem das Halbleiterelement (3) angeordnet ist, wobei die Kontaktelemente (8) des Sockels (5) elektrisch mit dem Träger (10) verbunden sind,
und wobei der Träger (10) vorzugsweise aus einem elektrisch isolierenden Material gefertigt ist, insbesondere aus Keramik, Silizium oder Kunststoff.

7. Lichtquelle nach Anspruch 6,
wobei der Träger (10) aus einem gut wärmeleitendem Material gefertigt ist, vorzugsweise aus Keramik, Silizium oder Kunststoff oder einem Material, das ähnlich gut Wärme leitet, wie eines der zuletzt genannten Materialien.

8. Lichtquelle nach Anspruch 6 oder 7,
mit einem Überzug, der auf dem Träger (10) angeordnet ist und der sich über das Halbleiterelement (3) erstreckt.

9. Lichtquelle nach einem der vorhergehenden Ansprüche,
bei der das Gehäuse (2) eine Öffnung aufweist und das Halbleiterelement (3) in einem Bereich der Öffnung angeordnet ist.

10. Lichtquelle mit den in den Ansprüchen 6 und 9 genannten Merkmalen,
wobei die Öffnung in dem Bereich eine Form aufweist, die auf die äußere Form des Trägers (10) abgestimmt ist, vorzugsweise mit letzterer zumindest teilweise korrespondiert.

11. Zahnmedizinisches Gerät,
aufweisend
- eine Lichtquelle nach einem der vorhergehenden Ansprüche,
wobei der Sockel (5) der Lichtquelle (1) vorzugsweise an die in dem Gerät angeordnete Fassung des Geräts angepasst ist.

## Claims

1. Light source for use in an apparatus, in particular a medical or dental apparatus, said light source comprising:
- at least one semiconductor element (3) that is arranged in a housing (2), wherein the semiconductor element (3) has a light-emission surface (6), and
- a cap (5), which extends from a side of the semiconductor element (3) that lies opposite to the light-emission surface (6) and which is provided to be inserted in a socket that is arranged on the apparatus,
wherein the cap (5) has contact elements (8) and lines (7) for supplying power to the semiconductor element (3),
- a series resistor (60) electrically connected to the lines (7), wherein the series resistor (60) is arranged in a recess (61) of the cap (5),
- an optical element (12) for influencing the light emitted by the semiconductor element (3), said optical element being arranged in front of the light-emission surface (6),
**characterized**
**in that** the contact elements (8) and the lines (7) are chemically deposited or electrodeposited directly on the cap (5),
wherein the lines (7) are guided through the recess (61) and the series resistor (60) is electrically connected to the lines (7) there.

2. Light source according to any one of the preceding claims,
wherein the cap (5) is connected to the housing (2) by way of a snap-fit connection.

3. Light source according to any one of the preceding claims,
wherein the optical element (12) forms a light-emergence window,
wherein the optical element (12) preferably is held on the housing (2) and/or is integrally connected to the housing (2).

4. Light source according to any one of the preceding claims,
wherein the optical element (12) is connected to the housing (2) in airtight and/or watertight fashion.

5. Light source according to any one of the preceding claims,
wherein the optical element (12) has a plane parallel, convex, biconvex or spherical form, and/or wherein the optical element (12) consists of glass, sapphire or a light-guiding polymer.

6. Light source according to any one of the preceding claims,
furthermore comprising:
- a carrier (10), on which the semiconductor element (3) is arranged,
wherein the contact elements (8) of the cap (5) are electrically connected to the carrier (10),
and wherein the carrier (10) is preferably manufactured from an electrically insulating material, in particular from a ceramic, silicon or plastic.

7. Light source according to Claim 6,
wherein the carrier (10) is manufactured from a material with good thermal conductivity, preferably from a ceramic, silicon or plastic or a material with a similarly good thermal conductivity as one of the last-mentioned materials.

8. Light source according to Claim 6 or 7,
comprising a sheath that is arranged on the carrier (10) and that extends over the semiconductor element (3) .

9. Light source according to any one of the preceding claims,
wherein the housing (2) has an opening and the semiconductor element (3) is arranged in a region of the opening.

10. Light source comprising the features specified in claims 6 and 9,
wherein the opening in the region has a form that is matched to the external form of the carrier (10), preferably at least partly corresponding to the latter.

11. Dental apparatus,
comprising
- a light source according to any one of the preceding claims,
wherein the cap (5) of the light source (1) is preferably matched to the socket of the apparatus arranged in the apparatus.

## Revendications

1. Source de lumière destinée à être utilisée dans un appareil, en particulier dans un appareil médical ou dentaire, présentant
- au moins un élément semi-conducteur (3) disposé dans un boîtier (2),
dans laquelle l'élément semi-conducteur (3) présente une surface d'émission de lumière (6), et
- un socle (5), qui s'étend depuis un côté de l'élément semi-conducteur (3) faisant face à la surface d'émission de lumière (6), et qui est prévu pour être inséré au niveau d'une douille disposée dans l'appareil,
dans laquelle le socle (5) présente des éléments de contact (8) et des câbles (7) servant à l'alimentation en courant de l'élément semi-conducteur (3),
- une résistance série (60) reliée électriquement aux câbles (7), dans laquelle la résistance série (60) est disposée dans un évidement (61) du socle (5),
- un élément optique (12), servant à influencer la lumière émise par l'élément semi-conducteur (3), qui est disposé devant la surface d'émission de lumière (6),
**caractérisée en ce que** les éléments de contact (8) et les câbles (7) sont déposés par voie chimique ou par voie galvanique directement sur le socle (5), dans laquelle les câbles (7) sont guidés à travers l'évidement (61) et la résistance série (60) y est reliée électriquement aux câbles (7).

2. Source de lumière selon l'une quelconque des revendications précédentes, où le socle (5) est relié au boîtier (2) par l'intermédiaire d'une liaison à encliquetage.

3. Source de lumière selon l'une quelconque des revendications précédentes, où l'élément optique (12) forme une fenêtre de sortie de lumière, dans laquelle l'élément optique (12) est maintenu de préférence au niveau du boîtier (2) et/ou est relié d'un seul tenant au boîtier (2).

4. Source de lumière selon l'une quelconque des revendications précédentes, où l'élément optique (12) est relié au boîtier (2) de manière étanche à l'air et/ou à l'eau.

5. Source de lumière selon l'une quelconque des revendications précédentes, dans laquelle l'élément optique (12) est formé de manière parallèle dans un plan, de manière convexe, de manière biconvexe ou en forme de sphère, et/ou dans laquelle l'élément optique (12) est constitué de verre, de saphir ou d'un polymère photoconducteur.

6. Source de lumière selon l'une quelconque des revendications précédentes, présentant par ailleurs un support (10), au niveau duquel l'élément semi-conducteur (3) est disposé, dans laquelle les éléments de contact (8) du socle (5) sont reliés de manière électrique au support (10), et dans laquelle le support (10) est produit de préférence à partir d'un matériau électriquement isolant, en particulier à partir de céramique, de silicium ou de matière plastique.

7. Source de lumière selon la revendication 6, dans laquelle le support (10) est produit à partir d'un matériau présentant une thermoconductivité satisfaisante, de préférence à partir de céramique, de silicium ou de manière matière plastique ou d'un matériau, qui présente une conductivité thermique aussi satisfaisante qu'un des matériaux évoqués en dernier lieu.

8. Source de lumière selon la revendication 6 ou 7, avec un revêtement, qui est disposé sur le support (10) et qui s'étend par-dessus l'élément semi-conducteur (3).

9. Source de lumière selon l'une quelconque des revendications précédentes, où le boîtier (2) présente une ouverture et l'élément semi-conducteur (3) est disposé dans une zone de l'ouverture.

10. Source de lumière avec les caractéristiques mentionnées dans les revendications 6 et 9, dans laquelle l'ouverture dans la zone présente une forme, qui est adaptée à la forme extérieure du support (10), de préférence correspond à cette dernière au moins en partie.

11. Appareil dentaire présentant une source de lumière selon l'une quelconque des revendications précédentes, dans lequel le socle (5) de la source de lumière (1) est adapté de préférence à la douille de l'appareil disposée dans l'appareil.
